# EUROPEAN PATENT SPECIFICATION

(11) **EP 2 265 941 B1**
(45) Date of publication and mention of the grant of the patent: **02.11.2011**
(21) Application number: 09733513.7
(22) Date of filing: 16.04.2009
(51) Int. Cl.: G01N 30/46, G01N 30/86

(54) **Method for adjusting operating parameters in comprehensive two-dimensional chromatography**
Verfahren zur Anpassung von Betriebsparametern in der umfassenden zweidimensionalen Gaschromatographie
Méthode d'ajustement de paramètres opératoires en chromatographie gazeuse bidimensionelle totale

(30) Priority: 17.04.2008 US 45722 P; 17.04.2008 EP 08154720
(43) Date of publication of application: 29.12.2010
(73) Proprietor: DSM IP Assets B.V., 6411 TE Heerlen (NL)
(72) Inventor: MOMMERS, Johannes Helena Michael, NL-6231 JP Meerssen (NL); KNOOREN, Jeroen Albert Angelicus, NL-6447 CE Merkelbeek (NL); MENGERINK, Ynze, NL-6361 HH Veasrade (NL); WILBERS, Arnold Theodor Marie, NL-6231 HS Sittard (NL)
(74) Representative: Kirk, Martin John
(86) International application number: PCT/EP2009/054565
(87) International publication number: WO 2009/127708

(56) References cited:
- WO-A-2005/111599
- US-A- 5 405 432
- US-A- 5 987 959
- US-A- 6 153 438
- US-A1- 2002 194 898
- SHELLIE R ET AL: "Effects of pressure drop on absolute retention matching in comprehensive two-dimensional gas chromatography" JOURNAL OF SEPARATION SCIENCE, WILEY, DE, vol. 27, no. 7-8, 1 January 2004 (2004-01-01), pages 504-512, XP002353229 ISSN: 1615-9306
- BLUMBERG L M ET AL: "Method Translation and Retention Time Locking in Partition GC" ANALYTICAL CHEMISTRY, AMERICAN CHEMICAL SOCIETY. COLUMBUS, US, vol. 70, no. 18, 15 September 1998 (1998-09-15), pages 3828-3839, XP002276489 ISSN: 0003-2700

## Description

The present invention relates to a method for locking the two-dimensional retention times of compounds in a comprehensive two-dimensional gas chromatographic analysis such that they match those defined in a known comprehensive two-dimensional chromatographic method.

Comprehensive two-dimensional gas chromatography (GCxGC) is a powerful analytical technique for the analysis of complex samples. One of the main advantages of GCxGC is its high separation power making this technique ideal for unraveling complex mixtures. Another main advantage is that GCxGC provides structured chromatograms in which compounds with similar chemical properties appear as distinct groups in the 2D chromatogram. Nowadays, GCxGC is used to solve all kinds of real-life analytical problems in a wide variety of fields such as the analysis of petrochemical, food, environmental, and biological samples. For an overview of the GCxGC technology the reader is referred to: J. Sep. Sci., 27; 359-379 (2004), Górecki et al The evolution of comprehensive two dimensional gas chromatography".

As in one-dimensional GC (1 D-GC), retention time shifts in GCxGC are unwanted. Reproducible retention times are highly favorable or even required for visually comparing 2D chromatograms, e.g. when using 2D templates for group-type analysis, when using 2D chromatograms as chemical fingerprints, or when applying all kinds of chemometric calculations.

The problem of retention time shifts in 1D-GC can be solved by a procedure called retention time locking (RTL), introduced by Blumberg and Klee [United States Patent 5,987,959]. RTL allows one to maintain equal retention times for the same or different columns as long as both columns have the same type of stationary phase and equal phase ratio. By using RTL, chromatograms can be reproduced accurately from one column to another or from one GC to another. RTL is achieved by adjusting the column head pressure at the injection site of the column.

However, in comprehensive multidimensional gas chromatography (abbreviated as CMDGC, exemplified by GCxGC), retention times may or will shift in each of the dimensions.

In United States patent 6,494,078 it has been proposed that retention time shifts in CMDGC can likewise be remedied by applying RTL based on adjustment of column head pressure for each of the dimensions. However, this type of RTL on comprehensive multidimensional gas chromatography has some disadvantages; an extra split point in front of the modulator is needed, including an extra electronic pressure controller for regulating the pressure at this point.

Given the fact that RTL based on column head pressure adjustments in GCxGC is unsatisfactory, the only alternatives hitherto available are mathematical post-analysis alignment techniques for eliminating retention time shifts in both dimensions as reported e.g. by Zhang et al [Anal. Chem. 80(8), 2664-2671 (2008) "Two-dimensional Correlation Optimized Warping Algorithm for Aligning GCxGC-MS Data"] and Skov et al. [J Chromatogr. A (2009) "Handling within run retention time shifts in two-dimensional chromatography data using shift correction and modeling"].

The present invention provides a (automated) method for eliminating or minimizing retention time shifts in comprehensive two-dimensional gas chromatography. Under nominal identical conditions (identical column-set specifications and GCxGC oven temperature programming), the invention allows one to reproduce the two-dimensional retention times from one column-set to another, from one GCxGC to another or from one column outlet pressure to another. A procedure is described to (automatically) adjust the head pressure of the primary column and the (effective) secondary column length of a new comprehensive two-dimensional gas chromatography system to compensate for the two-dimensional retention time differences with a known prior comprehensive two-dimensional gas chromatography system.

The GCxGC retention time locking procedure according to the invention involves two steps which can be applied either simultaneously or consecutively. One step involves locking the primary dimension retention times, and the other step involves locking the secondary dimension retention times.

Locking of the primary dimension retention times suitably can be made by using the retention time locking procedure as described in United States Patent 5,987,959, by adjusting the head pressure of the primary column.

Locking of the secondary dimension retention times according to the present invention suitably can be made by stepwise adjusting the effective secondary column length.

Hence, according to a preferred embodiment of the present invention the primary dimension of a comprehensive two-dimensional gas chromatograph system is locked by adjusting the column head pressure, while the secondary dimension is locked by adjusting the effective secondary column length.

Accordingly, in one embodiment the present invention relates to a method for adjusting operating parameters of a new comprehensive two-dimensional gas chromatograph system having a primary and a secondary column and comprising a new primary column, and/or a new secondary column, to match the operating parameters of a known comprehensive two-dimensional gas chromatograph system comprising a prior primary column and a prior secondary column such that measured primary and secondary retention times of compounds in the new two-dimensional gas chromatography system are matched to prior primary and secondary retention times of the compounds in the known two-dimensional gas chromatography system wherein the length of the new secondary column is longer, preferably is 5 to 20 % longer than the length of the prior secondary column, wherein for the adjustment of the operating parameters of the new primary column measured primary retention times of the compounds are matched to prior primary retention times of the compounds, by injecting a standard having a target compound a plurality of times, each time at one of a plurality of column head pressures of the new primary column to yield a plurality of primary retention times of the target compound, each at different column head pressures; and establishing a calibration curve for identifying the change in column head pressure required to effect a change in primary retention time sufficient to match the primary retention time of the target compound in the new primary column to the prior primary retention time of the target compound, where after the column head pressure in the new comprehensive two-dimensional gas chromatograph system is set to the head pressure required to match the original primary retention time of the target compound and wherein for the adjustment of the operating parameters of the new secondary column measured secondary retention times of the compounds are matched to prior secondary retention times of the compounds, by injecting a standard having a target compound a plurality of times, each time at one of a plurality of effective secondary column lengths to yield a plurality of secondary retention times of the target compound, each at different effective secondary column lengths; and establishing a calibration curve for identifying the change in effective secondary column length required to effect a change in secondary retention time sufficient to match the measured secondary retention time of the target compound to the prior secondary retention time of the target compound, where after the effective secondary column length of the new comprehensive two-dimensional gas chromatography system is set to the effective secondary column length required to match the prior secondary retention time of the target compound. In the context of the present invention the effective secondary column length is defined as the length of the secondary column between the modulator (in case of a cryogenic two jet modulator, the last cold-jet position) and the detector, in other words the part of the secondary column which is used for the secondary dimension separation.

The present invention can be applied to all types of modulators in which the secondary column length can be adjusted by moving the secondary column through the modulator, or by moving the modulator and thereby adjusting the effective secondary column length.

The present invention further relates to a method for adjusting operating parameters of a comprehensive two-dimensional gas chromatograph system comprising re-injecting the standard and ascertaining the measured primary retention time of the target compound; and determining a final column head pressure from the measured primary retention time and the calibration curve such that the measured primary retention times for subsequent injections match the prior primary retention times.

The present invention further comprises a method for adjusting operating parameters of a comprehensive two-dimensional gas chromatograph system as described above further comprising, prior to the step of re-injecting, the step of replacing the original column with a different column.

The present invention further relates to a method for adjusting operating parameters of a comprehensive two-dimensional gas chromatograph, further comprising, prior to the step of re-injecting, the step of replacing the known column-set with a different column-set.

The present invention further comprises a method for adjusting operating parameters of a comprehensive two-dimensional gas chromatograph system as described above wherein the steps of re-injecting the standard, calculating a final column head pressure and setting the final column head pressure are performed using a different gas chromatograph.

The present invention further comprises a method for adjusting operating parameters of a comprehensive two-dimensional gas chromatograph system as described above, wherein the final column head pressure follows a pressure program.

The secondary column length may preferably be adjusted by stepwise sliding the secondary column through the modulator and thereby adjusting its length. However, sliding the modulator and thereby adjusting the secondary column length could also be an option.

Accordingly, the present invention further relates to a method for adjusting operating parameters of a comprehensive two-dimensional gas chromatograph system wherein the secondary column is slided through the modulator, thereby changing the effective secondary column length, re-injecting the standard and ascertaining the measured secondary retention time of the target compound; and determining a final effective secondary column length and/or determining the final sliding position of the secondary column from the measured secondary retention time and the calibration curve such that the measured secondary retention times for subsequent injections match the prior secondary retention times, whereafter the effective secondary column length of the new comprehensive two-dimensional gas chromatography system is set to the effective secondary column length required to match the prior secondary retention time of the target compound.

In the method for adjusting operating parameters of a comprehensive two-dimensional gas chromatograph according to the invention the steps of re-injecting the standard and determining a final effective secondary column length and/or determining the final sliding position of the secondary column can be performed using a different gas chromatograph.

The method for adjusting the operating parameters of a comprehensive two-dimensional gas chromatograph according to the invention can be used to adjust or optimize the second dimension separation.

According to the present invention the adjustment of operating parameters of the comprehensive two-dimensional gas chromatograph can be performed manually or automatically, preferably by a mechanism under software control.

In the context of the present invention the effective secondary column length is defined as the length of the column between the modulator (in case of a cryogenic two jet modulator, the last cold-jet position) and the detector.

For typical comprehensive two-dimensional gas chromatography columns, adjusting the effective secondary column lengths has no significant effect on the primary retention times; it has a linear effect on the secondary retention times.

It has been found that by using the present invention, GCxGC retention time shifts, which e.g. occur after replacing the column set, can be minimized to less than 0,5Wb (peak width at 4 sigma of the peak) for both dimension retention times.

### Brief description of the drawings

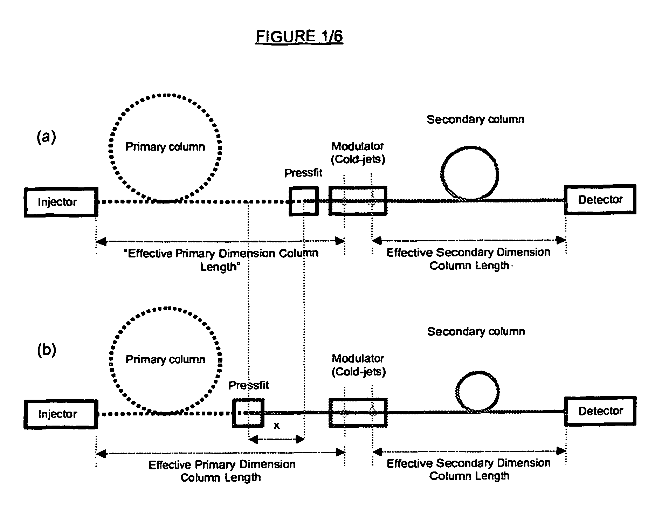

Fig. 1: Schematic illustration of adjusting the effective secondary column length by sliding the secondary column (manually or automatically) trough the cryomodulator. Going from (a) to (b) the effective secondary column length is decreased by x cm; the effective primary column length is accordingly increased by x cm.
Fig. 2: Overlay of 2D chromatograms of test mixtures obtained by using the original GCxGC method using the original column set A and the new column set B. The peaks in the 2D chromatograms of column set A are colored in red (ovals), and colored grey (rectangles) in column set B.
Fig. 3: Overlay of the 2D chromatograms obtained with the original column set A (red peaks; ovals) and column set B (gray peaks; rectangles), before (a) and after (b) locking the first dimension by adjusting the column head pressure.
Fig. 4: Overlay of the 2D chromatograms obtained with the original column set A (red peaks; ovals) and column set B (gray peaks; rectangles), before (a) and after (b) locking both the first and second dimension retention times.
Fig. 5: Influence of the column head pressure on the primary retention time.
Fig. 6: Influence of the secondary dimension sliding length of the secondary column on the secondary retention time.

### Example and comparative experiments

To demonstrate the applicability of the present invention, a Grob test mixture was analyzed using the original column sets A (VF1 MS 50mx0.25mmx0.4µm - VF17MS 1.5x0.10mmx0.2µm), and the conventional chromatographic GCxGC method. In the conventional method, a column head pressure of 41.75 psi and a secondary column length of 1.50 meter were used. The retention times obtained by using the conventional column-set (set A) and the original pressure (41.75 psi) are defined as the original retention times.

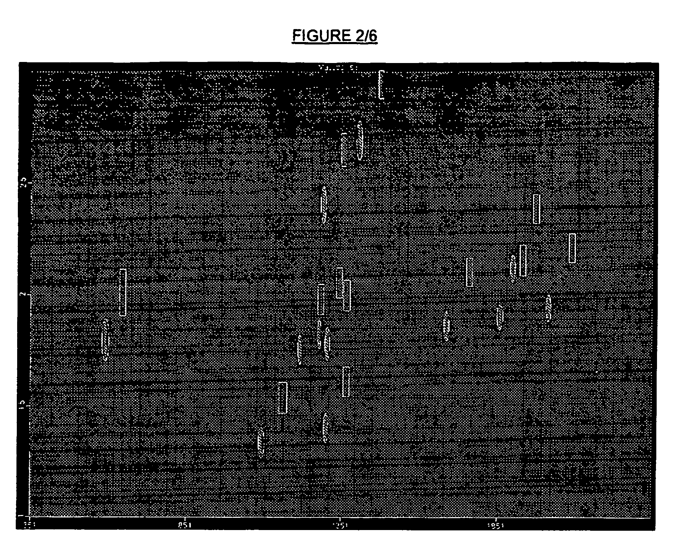

For demonstrating the feasibility of the present invention, the test mixture was also analyzed using a different column set, column set B. Column set B has the same column specifications as the conventional column, however the second dimension column length is approximately 10% longer than the original secondary column length. An overlay of the 2D chromatograms, so both obtained using the original (not locked) GCxGC method, is given in Figure 2. Going from the original column set A to the new column set B, all peaks shift (in this case) to both higher primary and higher secondary retention times.

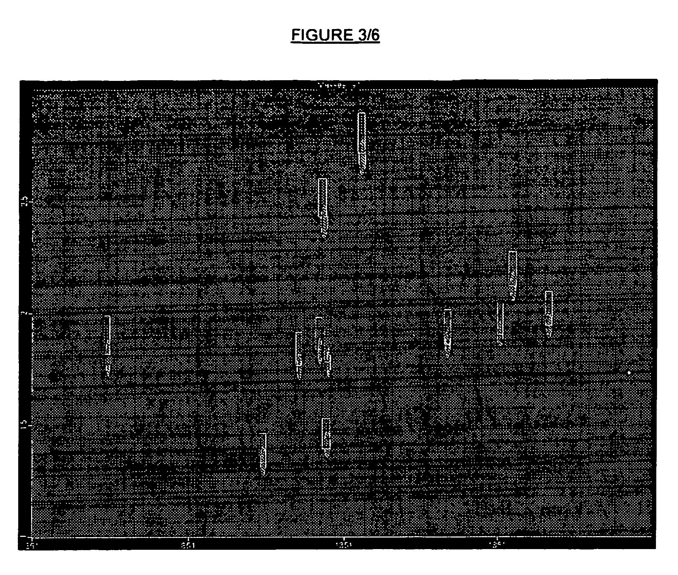

After performing the 2D RTL STEP 1, which is locking the primary dimension retention times by adjusting the column head pressure, the test mixture was analyzed again. An overlay of the 2D chromatograms, after locking the primary retention times, is given in Figure 3. The primary retention time shifts are less than 1 modulation period, which is less than 0,5Wb.

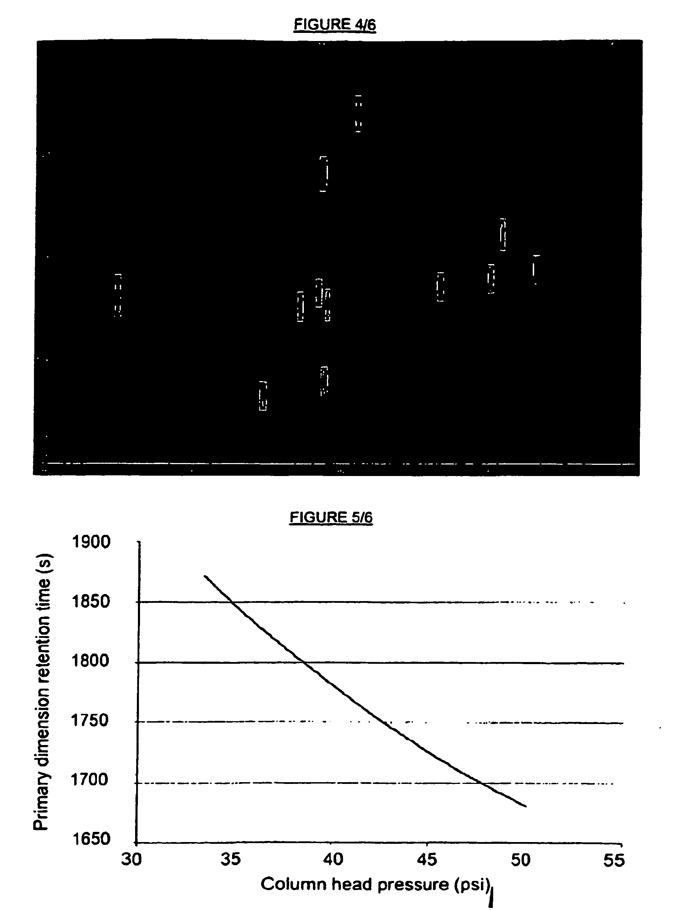

After performing 2D RTL STEP 2, which is locking the secondary dimension retention times by adjusting the effective secondary column length, the test mixture was analyzed again. An overlay of the 2D chromatograms, after locking the primary and secondary retention times, is given in figure 4. The primary and secondary retention time shifts are both less than 0,5Wb. For the performed analysis, STEP 2 has no significant influence on the primary retention times.

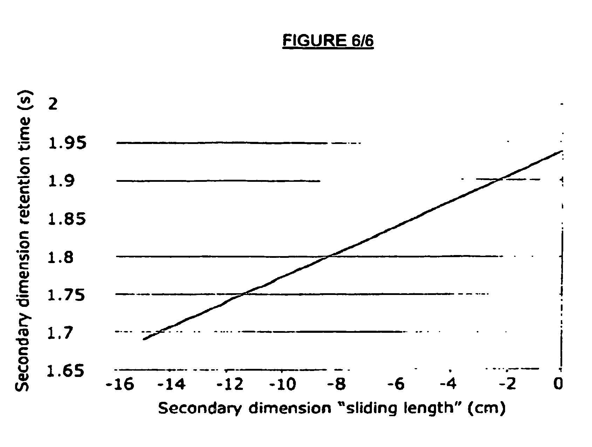

The influence of the column head pressure on the primary dimension retention times is illustrated in Figure 5. The influence of the effective secondary column length on the secondary retention time, plotted as secondary column sliding length (in centimeters) versus the secondary retention time is illustrated in Figure 6. The secondary column sliding length is defined as the total length of the secondary column which has been moved through the modulator.

## Claims

1. A method for adjusting operating parameters of a new comprehensive two-dimensional gas chromatograph system having a primary and a secondary column and comprising a new primary column, and/or a new secondary column, to match the operating parameters of a known comprehensive two-dimensional gas chromatograph system comprising a prior primary column and a prior secondary column such that measured primary and secondary retention times of compounds in the new two-dimensional gas chromatography system are matched to prior primary and secondary retention times of the compounds in the known two-dimensional gas chromatography system wherein the length of the new secondary column is longer, preferably 5 to 20 % longer than the length of the prior secondary column, wherein
a. for the adjustment of the operating parameters of the new primary column measured primary retention times of the compounds are matched to prior primary retention times of the compounds, by
i. injecting a standard having a target compound a plurality of times, each time at one of a plurality of column head pressures of the new primary column to yield a plurality of primary retention times of the target compound, each at different column head pressures; and
ii. establishing a calibration curve for identifying the change in column head pressure required to effect a change in primary retention time sufficient to match the primary retention time of the target compound in the new primary column to the prior primary retention time of the target compound, where after
iii. the column head pressure in the new comprehensive two-dimensional gas chromatograph system is set to the head pressure required to match the original primary retention time of the target compound and wherein
b. for the adjustment of the operating parameters of the new secondary column measured secondary retention times of the compounds are matched to prior secondary retention times of the compounds, by
i. injecting a standard having a target compound a plurality of times, each time at one of a plurality of effective secondary column lengths, effective secondary column length defined as the length of the secondary column between a modulator (in case of a cryogenic two jet modulator the last cold-jet position) and a detector, to yield a plurality of secondary retention times of the target compound, each at different effective secondary column lengths; and
ii. establishing a calibration curve for identifying the change in effective secondary column length required to effect a change in secondary retention time sufficient to match the measured secondary retention time of the target compound to the prior secondary retention time of the target compound, whereafter
iii. the effective secondary column length of the new comprehensive two-dimensional gas chromatography system is set to the effective secondary column length required to match the prior secondary retention time of the target compound.

2. A method according to claim 1, wherein the effective secondary column length is set by adjusting the position of the modulator.

3. A method according to claim 1 or 2, wherein the position of the modulator is adjusted by sliding with respect to the secondary column

4. A method according to any of the claims 1 to 3, wherein the modulator is a cryogenic modulator.

5. A method according to any of the claims 1 to 4, wherein the effective secondary column length is regulated automatically, preferably by a mechanism under software control.

## Patentansprüche

1. Verfahren zum Einstellen von Betriebsparametern eines neuen komprehensiven zweidimensionalen Gaschromatographiesystems mit einer primären und einer sekundären Säule und umfassend eine neue primäre Säule und/oder eine neue sekundäre Säule, um an die Betriebsparameter eines bekannten komprehensiven zweidimensionalen Gaschromatographiesystems, umfassend eine vorherige primäre Säule und eine vorherige sekundäre Säule, abzugleichen, so dass gemessene primäre und sekundäre Retentionszeiten von Verbindungen auf dem neuen zweidimensionalen Gaschromatographiesystem mit vorherigen primären und sekundären Retentionszeiten der Verbindungen auf dem bekannten zweidimensionalen Gaschromatographiesystem abgeglichen werden, wobei die Länge der neuen sekundären Säule länger, vorzugsweise 5 bis 20 % länger, als die Länge der vorherigen sekundären Säule ist, wobei
a. zum Einstellen der Betriebsparameter der neuen primären Säule gemessene primäre Retentionszeiten der Verbindungen mit vorherigen primären Retentionszeiten der Verbindungen abgeglichen werden durch
i. vielfaches Injizieren eines Standards mit einer Zielverbindung, jedes Mal bei einem von einer Vielzahl von Säulenkopfdrucken der neuen primären Säule, um eine Vielzahl von primären Retentionszeiten der Zielverbindung zu erhalten, jede bei einem anderen Säulenkopfdruck; und
ii. Erstellen einer Kalibrierkurve zum Bestimmen der Änderung des Säulenkopfdrucks, die erforderlich ist, um eine Änderung der primären Retentionszeit zu erzielen, die ausreicht, um die primäre Retentionszeit der Zielverbindung in der neuen primären Säule mit der vorherigen primären Retentionszeit der Zielverbindung abzugleichen, worauf
iii. der Säulenkopfdruck bei dem neuen komprehensiven zweidimensionalen Gaschromatographiesystem auf den Kopfdruck gestellt wird, der erforderlich ist, um der ursprünglichen primären Retentionszeit der Zielverbindung zu entsprechen, und wobei
b. zum Einstellen der Betriebsparameter der neuen sekundären Säule gemessene sekundäre Retentionszeiten der Verbindungen mit vorherigen sekundären Retentionszeiten der Verbindungen abgeglichen werden durch
i. vielfaches Injizieren eines Standards mit einer Zielverbindung, jedes Mal mit einer von einer Vielzahl von effektiven Längen der sekundären Säule, wobei die effektive Länge der sekundären Säule als die Länge der sekundären Säule zwischen einem Modulator (im Fall eines kryogenen Zweistrahlmodulators die letzte Kältestrahl-Position) und dem Detektor definiert ist, um eine Vielzahl von sekundären Retentionszeiten der Zielverbindung zu erhalten, jede bei einer anderen effektive Länge der sekundären Säule; und
ii. Erstellen einer Kalibrierkurve zum Bestimmen der Änderung der effektiven Länge der sekundären Säule, die erforderlich ist, um eine Änderung der sekundären Retentionszeit zu erzielen, die ausreicht, um die gemessene sekundäre Retentionszeit der Zielverbindung mit der vorherigen sekundären Retentionszeit der Zielverbindung abzugleichen, worauf
iii. die effektive Länge der sekundären Säule des neuen komprehensiven zweidimensionalen Gaschromatographiesystems auf die effektive Länge der sekundären Säule eingestellt wird, die erforderlich ist, um der vorherigen sekundären Retentionszeit der Zielverbindung zu entsprechen.

2. Verfahren gemäß Anspruch 1, wobei die effektive Länge der sekundären Säule durch Einstellen der Position des Modulators gesetzt wird.

3. Verfahren gemäß Anspruch 1 oder 2, wobei die Position des Modulators durch Verschieben bezüglich der sekundären Säule eingestellt wird.

4. Verfahren gemäß einem der Ansprüche 1 bis 3, wobei der Modulator ein kryogener Modulator ist.

5. Verfahren gemäß einem der Ansprüche 1 bis 4, wobei die effektive Länge der sekundären Säule automatisch reguliert wird, vorzugsweise durch einen Mechanismus unter Softwarekontrolle.

## Revendications

1. Procédé d'ajustement de paramètres opératoires d'un nouveau système de chromatographie gazeuse bidimensionnelle totale comprenant une colonne primaire et une colonne secondaire, et comprenant une nouvelle colonne primaire et/ou une nouvelle colonne secondaire, pour correspondre aux paramètres opératoires d'un système de chromatographie gazeuse bidimensionnelle totale connu comprenant une colonne primaire antérieure et une colonne secondaire antérieure, de manière à ce que les temps de rétention primaires et secondaires mesurés de composés dans le nouveau système de chromatographie gazeuse bidimensionnelle correspondent aux temps de rétention primaires et secondaires antérieurs des composés dans le système de chromatographie gazeuse bidimensionnelle connu, la longueur de la nouvelle colonne secondaire étant plus longue, de préférence 5 à 20 % plus longue que la longueur de la colonne secondaire antérieure, dans lequel
a. pour l'ajustement des paramètres opératoires de la nouvelle colonne primaire, les temps de rétention primaires mesurés des composés sont faits correspondre avec les temps de rétention primaires antérieurs des composés, par
i. injection d'un standard contenant un composé cible une pluralité de fois, chaque fois à une d'une pluralité de pressions de tête de colonne de la nouvelle colonne primaire pour obtenir une pluralité de temps de rétention primaires du composé cible, chacun à des pression de tête de colonne différentes ; et
ii. l'établissement d'une courbe d'étalonnage pour identifier le changement de pression de tête de colonne nécessaire pour effectuer un changement de temps de rétention primaire suffisant pour faire correspondre le temps de rétention primaire du composé cible dans la nouvelle colonne primaire au temps de rétention primaire antérieur du composé cible, puis
iii. la pression de tête de colonne dans le nouveau système de chromatographie gazeuse bidimensionnelle totale est réglée à la pression de tête nécessaire pour correspondre au temps de rétention primaire initial du composé cible, et dans lequel
b. pour l'ajustement des paramètres opératoires de la nouvelle colonne secondaire, les temps de rétention secondaires mesurés des composés sont faits correspondre avec les temps de rétention secondaires antérieurs des composés, par
i. injection d'un standard contenant un composé cible une pluralité de fois, chaque fois à une d'une pluralité de longueurs de colonne secondaire effectives, la longueur de colonne secondaire effective étant définie comme la longueur de la colonne secondaire entre un modulateur (dans le cas d'un modulateur cryogénique à deux jets, la dernière position de jet froid) et un détecteur, pour obtenir une pluralité de temps de rétention secondaires du composé cible, chacun à des longueurs de colonne secondaire effectives différents ; et
ii. l'établissement d'une courbe d'étalonnage pour identifier le changement de longueur de colonne secondaire effective nécessaire pour effectuer un changement de temps de rétention secondaire suffisant pour faire correspondre le temps de rétention secondaire mesuré du composé cible au temps de rétention secondaire antérieur du composé cible, puis
iii. la longueur de colonne secondaire effective du nouveau système de chromatographie gazeuse bidimensionnelle totale est réglée à la longueur de colonne secondaire effective nécessaire pour correspondre au temps de rétention secondaire antérieur du composé cible.

2. Procédé selon la revendication 1, dans lequel la longueur de colonne secondaire effective est réglée par ajustement de la position du modulateur.

3. Procédé selon la revendication 1 ou 2, dans lequel la position du modulateur est ajustée par coulissement par rapport à la colonne secondaire.

4. Procédé selon l'une quelconque des revendications 1 à 3, dans lequel le modulateur est un modulateur cryogénique.

5. Procédé selon l'une quelconque des revendications 1 à 4, dans lequel la longueur de colonne secondaire effective est régulée automatiquement, de préférence par un mécanisme contrôlé par un logiciel.
